Europäisches Patentamt

**European Patent Office**

**Office européen des brevets**

(19)

(11) Numéro de publication : **0 015 820**
**B1**

(12)

# FASCICULE DE BREVET EUROPÉEN

(45) Date de publication du fascicule du brevet :
01.06.83

(51) Int. Cl.³ : **G 01 P 3/68**

(21) Numéro de dépôt : **80400264.0**

(22) Date de dépôt : **26.02.80**

(54) Dispositif pour la mesure des vitesses linéaires sans contact et sans marquage.

(30) Priorité : **28.02.79 FR 7905165**

(43) Date de publication de la demande :
**17.09.80 Bulletin 80/19**

(45) Mention de la délivrance du brevet :
**01.06.83 Bulletin 83/22**

(84) Etats contractants désignés :
**AT BE CH DE GB IT LU NL SE**

(56) Documents cités :
**FR A 2 126 447**
**FR A 2 179 211**
**JOURNAL OF SCIENTIFIC INSTRUMENTS**
**(Journal of Physics E) septembre 1968, serie 2,**
**vol. 1, no. 9, Londres GB D. THOMSON : « A**
**tracer-particle fluid velocity meter incorporating**
**a laser », pages 929-932**

**METALLURGIE, vol. 69, no. 7/8, juillet/août 1972**
**Paris FR P. PETIT et al. : « Mise au point d'une**
**méthode de mesure de la vitesse des produits en**
**cours de laminage » pages 475-481**

(73) Titulaire : **ANVAR Agence Nationale de Valorisation**
**de la Recherche**
**13, rue Madeleine Michelis**
**F-92522 Neuilly-sur-Seine (FR)**

(72) Inventeur : **Sabater, Jacques**
**6 Résidence Fonds Fanettes**
**F-91190 Gif sur Yvettes (FR)**
Inventeur : **Bauduin, Serge**
**Chemin de la Batonnière**
**Corenc F-38700 La Tronche (FR)**

(74) Mandataire : **Pinguet, André**
**CAPRI 28 bis, avenue Mozart**
**F-75016 Paris (FR)**

EP 0 015 820 B1

Jouve, 18, rue St-Denis, 75001 Paris, France

**0 015 820**

## Dispositif pour la mesure des vitesses linéaires sans contact et sans marquage

La présente invention concerne la mesure directe des vitesses linéaires, sans contact entre les éléments en mouvement relatif, et sans marquage sur ces éléments.

Le problème de la mesure industrielle directe des grandeurs liées au déplacement de solides et de fluides (vitesses, longueurs débits) a longtemps manqué de solutions, notamment en raison de la nécessité de placer l'instrument en contact avec le matériau, pour effectuer la mesure de ces grandeurs.

En revanche, depuis moins de dix ans, de nouvelles technologies ont donné le jour à une nouvelle famille de solutions industrielles pour la mesure directe de vitesses linéaires ou par intégration de cette vitesse, de longueurs (intégration dans le temps) et de débits (intégration dans l'espace).

Toutes ces solutions ont en commun la mise en œuvre d'une détection assez simple ne perturbant pas le procédé physique, suivi d'un traitement en général complexe élaborant la mesure à partir du signal brut en provenance du ou des détecteurs.

L'invention concerne plus particulièrement le cas où la direction du déplacement est connue et où seule l'amplitude est à déterminer.

On a donc des capteurs qui ne perturbent pas le procédé physique. Lorsqu'il s'agit de déplacements de matériaux solides, cela signifie : mesure sans contact. Lorsqu'il s'agit de veines fluides, cela signifie au moins que les capteurs sont disposés en paroi, sans partie immergée dans l'écoulement. Pour satisfaire à ces exigences, on trouve notamment des capteurs optiques.

La détection optique est l'une de celles qui semblent présenter le plus d'intérêt. Qu'ils soient à un ou plusieurs faisceaux, les détecteurs optiques comprennent tous une ou plusieurs sources lumineuses, une optique guidant les trajets de l'énergie lumineuse et un ou plusieurs détecteurs.

En ce qui concerne la source lumineuse, on rencontre deux options assez fondamentalement différentes selon qu'il s'agit de lampes (de type quartz-iode par exemple) ou de lasers de faible puissance (Hélium Néon le plus souvent). Mais, il peut aussi arriver que la lumière ambiante soit suffisante pour certaines applications. Le trajet optique est en général spécifique de l'application. Les détecteurs sont le plus souvent des semi-conducteurs photosensibles.

Derrière les capteurs, on trouve des éléments de traitement des signaux qui font un large usage des technologies modernes de l'électronique à base de circuits intégrés pour réaliser des modules analogiques ou numériques de calcul spécialisés (comptage, corrélation, etc...) et spécifiques de l'application envisagée.

L'invention a pour but de permettre la mesure précise des vitesses linéaires, soit d'un élément en défilement devant un poste fixe, par exemple le défilement de la feuille dans une machine à papier, soit la vitesse d'un mobile devant une base fixe, par exemple la vitesse d'un véhicule sur voie ferrée, mesurée par rapport à un rail. L'invention peut s'appliquer également à la mesure d'un fluide, comme le jet aux lèvres d'une machine à papier.

L'invention utilise le fait que la surface de l'objet en défilement est irrégulière et que, si l'on illumine un point fixe de l'espace, par lequel passe l'objet mobile en défilement, il est possible de capter une émission en retour, caractéristique de la zone de l'objet en défilement, balayée par l'illumination. Si on illumine dans les mêmes conditions deux points fixes de l'espace par lesquels passe l'objet en défilement et que l'on capte dans les mêmes conditions les deux émissions en retour, on constate que ces émissions irrégulières sont, comme on peut s'y attendre, identiques à un décalage près dans le temps, décalage qui dépend de la vitesse linéaire de défilement de l'objet. La mesure de ce décalage permet de calculer la vitesse linéaire. Cette mesure peut être faite en utilisant les techniques d'intercorrélation. Il s'agit d'une mesure indirecte du temps de parcours entre deux détecteurs. Ce temps est représenté par l'abscisse du « pic » de la courbe d'intercorrélation entre les signaux des deux détecteurs (voir plus loin). Ces techniques sont connues notamment par l'article de P. Petit et al, publié dans la « Revue de Métallurgie » Juillet-Août 1972, pages 475-481. Mais ces techniques ne peuvent s'appliquer que si les signaux fournis par les détecteurs satisfont à certaines conditions (signaux aléatoires, spectre en fréquence de largeur suffisante, etc...). Or, une première approche a permis de conclure que le spectre en fréquence d'un signal rétrodiffusé par une feuille de papier, une tôle, par exemple en acier ou en aluminium à la sortie d'un laminoir, la surface d'un rail de voie ferrée, ou encore un fil métallique à la sortie d'une filière, le jet aux lèvres d'une machine à papier, est suffisamment riche pour obtenir un pic de corrélation assez pointu.

On a déjà proposé dans le FR-A-2 179 211 un dispositif faisant application de ce fait. Ce dispositif comporte deux sources lumineuses identiques avec des optiques appropriées, pour éclairer deux points de l'objet en défilement, séparés par un écart constant. Deux capteurs identiques reçoivent les signaux en retour. Les capteurs transforment les signaux lumineux en signaux électroniques.

Un tel dispositif n'a pas pu recevoir d'application industrielle, car il est trop coûteux et trop difficile à mettre en œuvre. Il est évident que la précision de la mesure dépend de l'écart entre les points éclairés et croît avec cet écart, et dépend également de la largeur de la zone éclairée dans le sens du défilement, la précision décroissant quand cette largeur augmente. Avec des capteurs à lampe donnant sur l'objet en défilement, un spot de 0,5 à 1 mm, il faut écarter les capteurs de 50 à 100 cm l'un de l'autre pour permettre d'atteindre une précision de un pour mille de la mesure de la vitesse.

Un tel écart entre les sources lumineuses a pour première conséquence d'imposer une grande dimension au dispositif, qui, de ce fait, est encombrant. Une deuxième conséquence est la difficulté d'avoir un parallélisme assez précis des faisceaux lumineux disposés à un tel écart pour que les signaux en retour soient suffisamment semblables. Pour ces raisons, et aussi en raison du prix de l'appareil, l'application n'a pu dépasser le stade de l'expérimentation de laboratoire.

On sait que (FR-A-2 126 447) l'utilisation du laser ou du laser à semi-conducteur (diode laser) permet, en raison de l'étroitesse du faisceau, de réduire la distance entre les points éclairés. Comme indiqué ci-dessus, on peut, en effet, en première approximation, considérer le rapport largeur de fente observée/distance entre capteurs comme une image de la précision de l'instrument ; dans ces conditions, on peut avec le laser, placer les deux capteurs à quelques centimètres d'intervalle. Il a alors été possible pour les inventeurs de concevoir un dispositif compact.

En outre, la puissance du faisceau laser permet de placer sans inconvénient le dispositif à plusieurs centimètres de l'objet à éclairer, ce qui facilite beaucoup la mise en place du dispositif et multiplie ses applications, alors qu'avec des lampes, il est nécessaire, à défaut d'optiques compliquées et coûteuses, de placer le dispositif à quelques millimètres seulement de la surface à éclairer, ce qui, en pratique, rend l'application souvent impossible.

La qualité géométrique du faisceau laser, sa faible divergence permet en plus d'avoir une profondeur de champ, c'est-à-dire une tolérance de mise au point assez importante, par exemple de quelques centimètres dans les applications citées plus haut. Ceci permet en pratique des applications qui seraient irréalisables avec une profondeur de champ trop faible. On peut obtenir des faisceaux de mêmes propriétés avec des lasers à semi-conducteur (diode laser), associés à une optique de collimation appropriée.

Pour ces diverses raisons, ainsi que pour d'autres raisons indiquées ci-après, l'application du laser comme en soi est avantageusement incorporée dans le dispositif de la présente invention.

Conformément à la présente invention, un dispositif pour la mesure par corrélation de la vitesse linéaire de défilement d'un objet de forme générale plane relativement audit dispositif, ledit dispositif comportant une source de rayonnement laser, un système séparateur pour former deux faisceaux distincts, et des moyens optiques pour focaliser les deux faisceaux sur deux points de l'espace par lesquels on fait passer ledit objet, le système séparateur fonctionnant pour renvoyer les faisceaux réfléchis et/ou rétrodiffusés par lesdits points sur des moyens détecteurs, est caractérisé en ce que les moyens détecteurs consistent en un capteur unique, et que le dispositif comporte en outre des moyens d'autocorrélation du signal émis par le capteur, des moyens permettant de déterminer la vitesse à partir du signal autocorrélé et des moyens d'affichage ou d'enregistrement de vitesse.

Avantageusement, le système séparateur effectuant le fractionnement du faisceau laser est constitué par une face semi-transparente. Il est essentiel que l'ensemble optique soit rigide, et dans certaines applications, il peut être constitué par un bloc unique.

La description qui va suivre, en regard des dessins annexés, donnée à titre d'exemple non limitatif, fera bien comprendre comment l'invention peut être réalisée, les particularités qui ressortent tant du dessin que du texte faisant bien entendu partie de ladite invention.

La figure 1 est une vue schématique en élévation avec partie en coupe d'un dispositif selon l'invention.

La figure 2 est une représentation schématique en plan de l'objet dont on doit mesurer la vitesse linéaire.

La figure 3 est une vue schématique en élévation d'une autre forme de réalisation de l'invention.

La figure 4 est une vue de profil du dispositif de la figure 3.

La figure 5 est un graphique représentant une fonction d'autocorrélation d'une fonction aléatoire.

La figure 6 est un graphique représentant une fonction d'autocorrélation de la somme de deux fonctions aléatoires, l'une étant le décalage dans le temps de l'autre ; et,

La figure 7 représente un graphique obtenu en pratique correspondant à la fonction de la figure 5.

Le dispositif selon l'invention comporte un appareil 10 et, relié par un câble à l'appareil 10, un bloc de traitement (non représenté) qui peut être installé à tout endroit approprié. L'appareil 10 est placé, quand il est en service à quelques centimètres d'un objet 11 en défilement, par exemple dans le sens de la flèche f, et qui peut être une nappe de papier dans une machine à papier, une tôle sortant d'un laminoir, un rail de voie ferrée, etc. L'appareil comporte un laser 15, un bloc optique 16, une cellule 17 avec éventuellement un filtre 18, sélectif du rayonnement laser, ces éléments étant logés dans un boîtier 19 dans lequel est prévue une fenêtre 20. Le bloc optique est constitué de prismes et de lentilles assemblés par collage. Un ensemble de deux prismes 161 et 162 forment un cube séparateur d'un type disponible dans le commerce. Le bloc est obtenu à partir de ce cube par adjonction d'un prisme 163 et de deux lentilles, une lentille cylindrique ou torique 164 et une lentille simple 165. Cette réalisation est avantageuse, mais on pourrait utiliser un équivalent, tel qu'une lame semi-réfléchissante associée à un prisme ou à un miroir. Une face de sortie 161a du prisme 161 est parallèle à la surface de l'objet à observer et l'axe d'émission du laser est perpendiculaire à cette surface. Cette disposition préférentielle permet d'avoir de façon simple des faisceaux à incidence normale à la surface de l'objet 11, mais cette incidence n'est pas indispensable, et il n'est pas non plus nécessaire que l'axe du laser soit normal à la surface de l'objet 11. Il pourrait occuper une position quelconque, pourvu qu'une optique appropriée donne à la sortie deux faisceaux parallèles.

Le laser est par exemple un laser Hélium Néon de deux mW, avec son bloc d'alimentation. On peut aussi utiliser un laser à semi-conducteur, qui est plus petit, moins fragile et requiert une tension d'alimentation beaucoup plus basse.

Le transducteur 17 est avantageusement une cellule à semi-conducteur de $4 \times 4$ mm de surface sensible, avantageusement précédée d'un filtre interférentiel centré sur une fréquence proche de celle du laser qui est de 632,8 nm. On peut aussi utiliser un faisceau de fibres optiques, ce qui permet de placer le récepteur lui-même à un endroit plus favorable (moins exposé, plus commode d'accès, etc...).

Le dispositif fonctionne de la façon suivante. Le laser 15 émet un faisceau source qui pénètre dans le bloc optique en traversant d'abord la lentille 164, puis le prisme 162. Le faisceau rencontre alors la surface semi-réfléchissante et se divise en deux, un premier faisceau dans le prolongement de la source traverse le prisme et est focalisé en 21 sur l'objet 11, et un deuxième faisceau focalisé en 22 sur l'objet 11 après réflexion totale sur la face 163a du prisme 163.

Les axes des faisceaux rétrodiffusés sont confondus avec ceux des faisceaux incidents, entre le système séparateur et les taches éclairées. Après réflexion respectivement sur la face 163a et sur la surface semi-réfléchissante, les faisceaux rétrodiffusés se superposent pour coïncider sur la cellule 17 après traversée de la lentille 165 et du filtre 18. Les deux faisceaux diffusés sont additionnés optiquement et ainsi renvoyés sur une seule et même cellule. On s'arrange pour concentrer sur la cellule une quantité maximale de lumière en provenance des points éclairés de l'objet 11. Le bloc optique permet aussi une concentration du faisceau source donnant, dans la zone de passage de l'objet 11 une largeur de faisceau de l'ordre de 100 $\mu$ pour une étendue « sens travers » de plusieurs millimètres (fig. 2), et pour une « profondeur de champ » de plusieurs centimètres, ce qui résoud les problèmes de battements de l'objet en défilement.

Le dispositif ainsi constitué présente des avantages importants. Il n'y a qu'une seule source de lumière cohérente, un seul détecteur et une optique simple qui sert à la fois à l'éclairage et au captage des faisceaux rétrodiffusés. Le prix de revient sera par conséquent relativement très intéressant. Le volume de l'appareil est réduit, il peut être placé facilement à l'emplacement qui sera le plus commode. On est assuré que les faisceaux émergents sont toujours parallèles, même si le calage du dispositif est imparfait, les trajets optiques des faisceaux images sont aussi parallèles, c'est-à-dire les deux images observées par la cellule à travers l'optique se présentent sous le même angle. Le fait d'avoir des images allongées dans le sens perpendiculaire au défilement, ce qui est obtenu par la lentille cylindrique ou torique (astigmatisme des faisceaux) permet une plus grande tolérance du positionnement de l'appareil. On est ainsi certain qu'une grande partie de la surface qui est éclairée par le premier faisceau se représentera dans la tâche éclairée par le second faisceau.

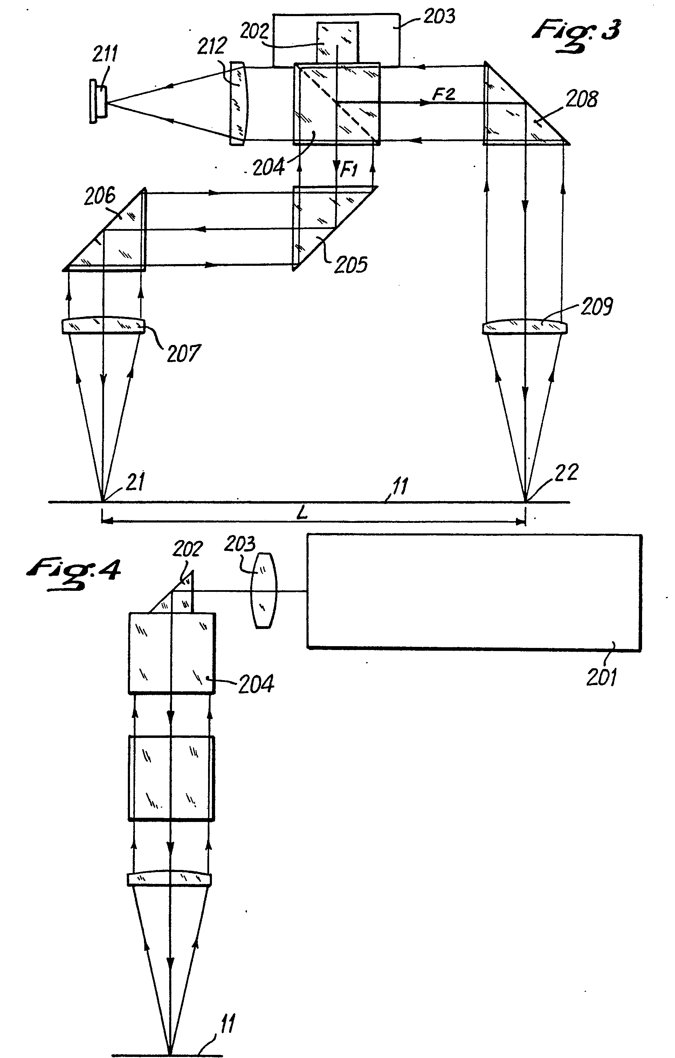

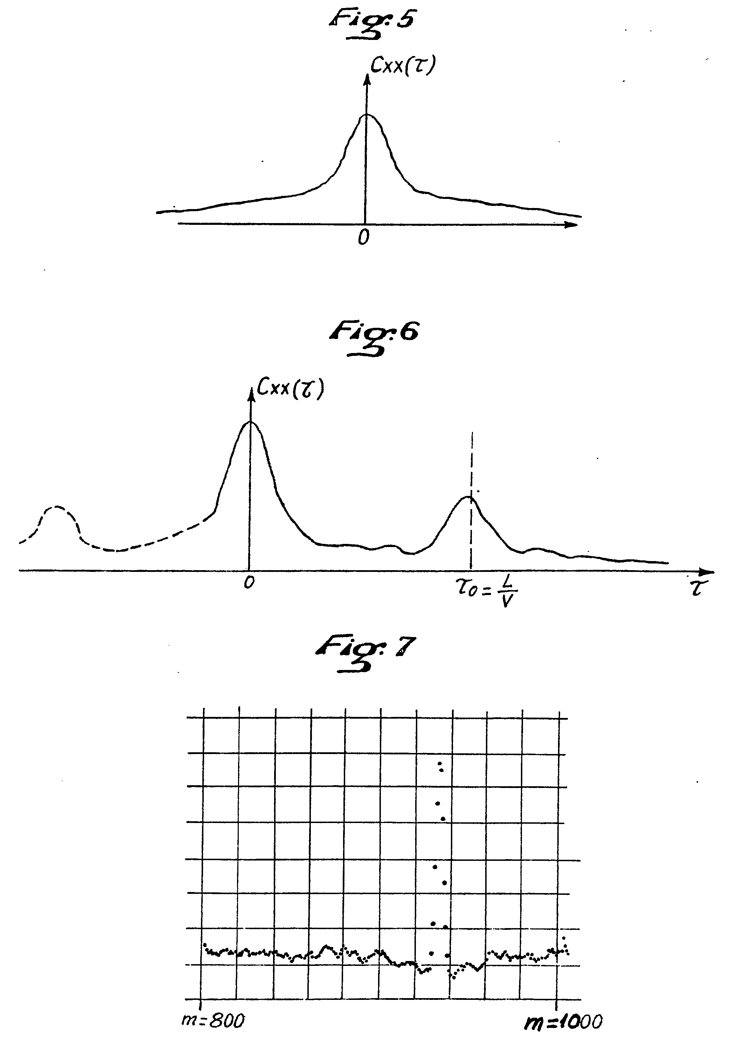

Les figures 3 et 4 représentent un autre mode de réalisation de l'invention. Ce dispositif comporte un laser 201 dont l'axe est horizontal, c'est-à-dire parallèle au plan de défilement de l'objet 11. Le faisceau incident est renvoyé vers le bas par un prisme 202, après avoir traversé une lentille cylindrique 203. Le faisceau traverse ensuite un cube séparateur 204 dans lequel il se sépare en un premier faisceau $F_1$ et un deuxième faisceau $F_2$. Le faisceau $F_1$ est focalisé sur le point 21, en traversant deux prismes 205 et 206, pour allonger le trajet d'un faisceau émergent, afin d'égaliser les trajets des deux faisceaux émergents, puis une lentille 207. Le faisceau $F_2$ est focalisé en 22, en traversant le prisme 208 et la lentille 209. L'axe de retour des faisceaux rétrodiffusés est le même que l'axe du faisceau incident jusqu'au cube séparateur, puis les faisceaux sont focalisés vers une cellule 211, en traversant une lentille normale 212. Les différents éléments sont assemblés rigidement dans un support approprié. Ils sont par exemple collés par une face latérale sur une plaque rigide par exemple en aluminium ou invar. Le fonctionnement est le même que pour l'appareil précédent. Les dimensions de l'appareil sont de l'ordre d'une quinzaine de centimètres, à part le laser qui est disposé perpendiculairement.

L'information recueillie dans le transducteur permet par un traitement approprié de connaître le temps de passage d'un point de l'objet du spot 21 au spot 22. Pour ce traitement on utilise le processus d'auto-corrélation comme décrit ci-dessous en raison des possibilités de calcul numérique, mais aussi pour d'autres raisons. On cherche avant tout à réaliser une méthode de mesure industrielle, donc de coût modeste. On vise des applications, que ce soit en mesure ou en contrôle de procédé (automatisation), pour lesquelles il suffirait, dans la grande majorité des cas, de disposer d'une bande passante de 10 hertz, mais pour lesquelles une précision de 1 ‰ serait parfois à peine suffisante : mesure de tirages ou de glissements. Enfin, on peut tolérer que l'instrument effectue une moyenne dans l'espace.

Bien que les relations d'autocorrélation ou d'intercorrélation soient des fonctions classiques, et que les deux brevets français cités ci-dessus décrivent des dispositifs pour la mesure de vitesses linéaires qui utilisent la corrélation de signaux optiques, il paraît utile d'en rappeler brièvement le principe, dans son application au dispositif de la présente invention.

Considérons un montage expérimental dans lequel on éclaire ponctuellement un point par exemple d'une feuille de papier en défilement continu et dans lequel on forme l'image de la tâche éclairée sur une cellule photosensible. Le papier étant un matériau hétérogène, le signal x(t) reçu par la cellule en fonction du temps présente un caractère aléatoire et on peut calculer une estimation de la fonction d'autocorrélation du retard $\tau$, variable introduite arbitrairement comme il est bien connu :

$$Cxx(\tau) = 1/T \int_0^T x(t) \cdot x(t - \tau)dt \qquad (1)$$

4

qui aura l'allure générale représentée sur la figure 5 : un pic à l'origine, plus ou moins aigu selon la richesse du spectre en fréquences des faisceaux lumineux rétrodiffusés par le papier, les dimensions de la tache lumineuse, l'intervalle d'intégration T choisi, etc...

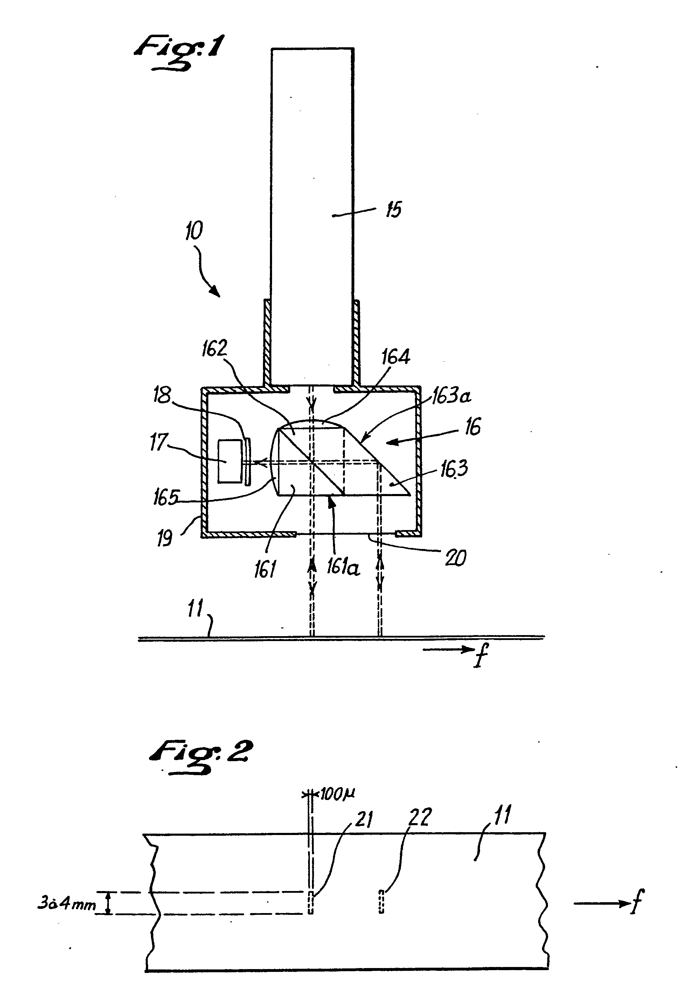

Supposons maintenant que le montage des figures 1 et 2 tel que les tâches 21 et 22 soient alignées dans le sens du mouvement de la feuille. Le signal x(t) émis en 22 sera le même que celui y(t) émis en 21, mais retardé d'un temps $\tau_0 = L/V$, L étant la distance 21-22 et V la vitesse de défilement continu de la feuille. Autrement dit,

$$x(t) = y(t - L/V). \tag{2}$$

Si donc, on calcule l'estimation de la fonction d'intercorrélation entre les deux signaux,

$$Cxy(\tau) = 1/T \int_0^T x(t) \cdot y(t - \tau)dt \tag{3}$$

on voit d'après (2) que la courbe obtenue sera la même que l'autocorrélation $Cxx(\tau)$ avec un décalage d'origine $\tau_0 = L/V$. Elle présentera donc un pic centré sur l'abscisse $\tau_0 = L/V$. La détection de ce pic et la mesure de son abscisse constituent donc une technique permettant de mesurer V.

Dans le dispositif de la présente invention, les faisceaux réfléchis et/ou rétrodiffusés sont dirigés sur une même et unique cellule dont le signal de sortie est traité par autocorrélation. La fonction autocorrélation est l'intégrale d'un produit de deux facteurs qui, dans le cas de la somme de deux signaux, deviennent chacun la somme de deux termes. La fonction autocorrélation devient dans ce cas la somme de quatre fonctions,

$$Czz(\tau) = 1/T \int_0^T z(t) \cdot z(t - \tau)dt$$

avec

$$z(t) = x(t) + y(t) \text{ et } z(t - \tau) = x(t - \tau) + y(t - \tau)$$

la fonction autocorrélation du signal composite peut alors s'écrire

$$Czz(\tau) = 1/T \int_0^T \{x(t) \cdot x(t - \tau) + y(t) \cdot y(t - \tau) + x(t) \cdot y(t - \tau) + y(t) \cdot x(t - \tau)\}dt.$$

On voit que chacune des quatre fonctions présente un pic, les deux premières à l'origine, la troisième un pic décalé sur l'abscisse $\tau_0$ et la quatrième un pic décalé sur l'abscisse $- \tau_0$ (figure 6).

En ne conservant que la partie positive, la fonction d'autocorrélation globale présentera donc un pic à l'origine et un pic dit d'intercorrélation à l'abscisse L/V. Toutefois, l'amplitude du pic à l'origine sera théoriquement le double de celle du pic d'intercorrélation.

La technique de détection de ce deuxième pic s'applique exactement de la même façon que s'il n'y avait pas de pic à l'origine, à la seule condition que la largeur du pic soit faible devant T.

Le signal du détecteur photoélectrique, convenablement amplifié et mis en forme est introduit dans un module électronique corrélateur. La sortie de ce module est une courbe de corrélation donnée sous la forme discrète de n valeurs numériques : $Cxx(m \cdot \Delta t)$, $1 \leq m \leq n$.

En pratique, on effectue les calculs sous forme numérique, c'est-à-dire qu'au lieu de l'intégrale (1) on calcule la somme :

$$Cxx(m \cdot \Delta t) = \frac{1}{N + 1} \sum_{K = 0}^{N} \{x(k \Delta t) \cdot Y(k - m)\Delta t)\}$$

dans laquelle $\Delta t$ est le pas de discrétisation de la courbe de corrélation obtenue, et peut être également à la fois la période d'échantillonage du signal à l'entrée du module corrélateur ; N est le nombre de produits élémentaires réalisés par le corrélateur pendant le temps de mesure T ; et m est le rang du point calculé.

On pourrait calculer 1 000 points (au moins) de la courbe de corrélation. Sur la figure 7, on voit un exemple de calcul avec 200 points ; on voit qu'on pourrait se contenter de ne calculer que par exemple 100 points, à condition de « recadrer » périodiquement ces 100 points, de façon à éviter de « perdre » le pic en cas de changement de vitesse.

La suite du traitement, effectué en numérique, comprend un lissage de la courbe (moyenne temporelle) ; une détection du pic d'intercorrélation ; un calcul du retard $\tau = p \cdot \Delta t$ ; une division donne la vitesse $V = L/\tau$, L étant l'intervalle connu entre les deux faisceaux. La mesure de vitesse est ensuite convertie en un signal analogique (0-10 volts par exemple) qui sera remis à jour à chaque nouveau calcul. La fréquence de cette remise à jour est limitée par les caractéristiques des signaux et par les performances du module de traitement mais il convient qu'elle soit aussi élevée que possible ; à titre indicatif, 10 valeurs par seconde serait considéré comme une fréquence très satisfaisante, 2 valeurs par seconde comme acceptable, une valeur toutes les 5 secondes comme inacceptable pour la plupart des applications.

En supposant L connu exactement, la précision de la mesure de vitesse est la précision avec laquelle on calcule $\tau_0$ ; elle est donc fonction :
— de l'acuité du pic,
— du pas de discrétisation de la courbe de corrélation (résolution).

On sait que le pic est d'autant plus pointu que le spectre en fréquence du signal temporel est plus large. Ce spectre est fonction notamment du capteur et de la vitesse de défilement de la bande. Avec un capteur à laser et pour une vitesse de 10m/s on a pu estimer que les fréquences les plus hautes de ce spectre étaient de l'ordre de 100 KHertz. La fréquence d'échantillonnage devra donc être sensiblement plus élevée, disons de l'ordre de 500 KHertz, si l'on veut ne pas perdre d'information et donc assurer de ce point de vue une acuité optimale du pic.

**Revendications**

1. Dispositif pour la mesure par corrélation, de la vitesse linéaire de défilement d'un objet (11) de forme générale plane relativement audit dispositif, ledit dispositif comportant une source de rayonnement laser (15, 201), un système séparateur (161, 162 ; 204) pour former deux faisceaux distincts, et des moyens optiques (16 ; 205-209) pour focaliser les deux faisceaux sur deux points (21, 22) de l'espace par lesquels on fait passer ledit objet (11), le système séparateur fonctionnant pour renvoyer les faisceaux réfléchis et/ou rétrodiffusés par lesdits points sur des moyens détecteurs, caractérisé en ce que les moyens détecteurs consistent en un capteur unique (17 ; 211) et que le dispositif comporte en outre des moyens d'autocorrélation du signal émis par le capteur, des moyens permettant de déterminer la vitesse à partir du signal autocorrélé et des moyens d'affichage ou d'enregistrement de vitesse.

2. Dispositif selon la revendication 1, caractérisé en ce que le système séparateur est tel que les faisceaux incidents et réfléchis et/ou rétrodiffusés entre le système séparateur et les zones de focalisation sont superposés.

3. Dispositif selon une des revendications 1 ou 2, caractérisé en ce qu'il comporte des moyens (164 ; 203) pour rendre les faisceaux astigmates.

4. Dispositif selon la revendication 3, caractérisé en ce que lesdits moyens pour rendre les faisceaux astigmates comportent une lentille cylindrique (164 ; 203) ou torique placée entre la source laser et le système séparateur.

5. Dispositif selon une des revendications 1 à 4, caractérisé en ce qu'il comporte une paire de prismes (205, 206), pour allonger le trajet d'un faisceau émergent du système séparateur, afin d'égaliser les trajets des deux faisceaux émergents du système séparateur.

**Claims**

1. Device for measurement by correlation of the linear run-past speed with respect to the said device of an object (11) of generally planar shape, the said device comprising a source of laser radiation (15, 201), a separator system (161, 162 ; 204) for forming two separate beams, and optical means (16 ; 205-209) for focussing the two beams on two points (21, 22) of the space through which the said object (11) is made to pass, the separator system operating to return the beams reflected and/or diffused in reverse direction via the said points to detector means, characterised in that the detector means comprise a single pickup (17 ; 211) and in that the device furthermore comprises auto-correlation means for the signal transmitted by the pickup, means allowing of determining the speed from the auto-correlated signal and means of displaying or recording speed.

2. Device according to claim 1, characterised in that the separator system is such that the incident and reflected and/or reversely diffused beams between the separator system and the focusing areas are superimposed.

3. Device according to one of the claims 1 or 2, characterised in that it comprises means (164 ; 203) for rendering the beams astigmatic.

4. Device according to claim 3, characterised in that the said means of rendering the beams astigmatic comprise a cylindrical or toroidal lens (164 ; 203) situated between the laser source and the separator system.

5. Device according to one of the claims 1 to 4, characterised in that it comprises a pair of prisms (205, 206) for lengthening the trajectory of a beam issuing from the separator system, for equalising the trajectories of the two beams issuing from the separator system.

**Ansprüche**

1. Vorrichtung zum Messen durch Korrelation der linearen Vorbeilaufgeschwindigkeit — relativ zur Vorrichtung — eines Gegenstandes (11) im allgemeinen planer Gestalt, mit einer Laserstrahlungsquelle (15, 201), einem Separatorsystem (161, 162 ; 204) zur Bildung zweier unterschiedlicher Bündel und optischen Einrichtungen (16 ; 205-209) zum Fokalisieren der beiden Bündel auf zwei Punkte (21, 22) des Raums bzw. der Strecke, durch den bzw. durch die man den Gegenstand (11) laufen läßt, wobei das Separatorsystem so arbeitet, daß es die durch diese Punkte oder Stellen reflektierten und/oder rückgestreuten Bündel auf Detektoreinrichtungen zurückgibt, dadurch gekennzeichnet, daß die Detektoreinrichtungen aus einem einzigen Aufnehmer (17 ; 211) bestehen und daß die Vorrichtung darüber hinaus Autokorrelationseinrichtungen für das vom Aufnehmer ausgesandte Signal, Einrichtungen, die es ermöglichen, die Geschwindigkeit ausgehend von dem autokorrelierten Signal zu bestimmen sowie Einrichtungen zum Anzeigen oder Aufzeichnen der Geschwindigkeit, umfaßt.

2. Vorrichtung nach Anspruch 1, dadurch gekennzeichnet, daß das Separatorsystem derart ist, daß die einfallenden und reflektierten und/oder rückgestreuten Bündel zwischen dem Separatorsystem und den Fokalisierungszonen einander überlagert sind.

3. Vorrichtung nach einem der Ansprüche 1 oder 2, gekennzeichnet durch Einrichtungen (164 ; 203) um die Bündel astigmatisch zu machen.

4. Vorrichtung nach Anspruch 3, dadurch gekennzeichnet, daß die Einrichtungen, um die Bündel astigmatisch zu machen, eine zylindrische Linse (164 ; 203) oder eine torische Linse umfassen, die zwischen Laserquelle und Separatorsystem angeordnet ist.

5. Vorrichtung nach einem der Ansprüche 1 bis 4, gekennzeichnet durch ein Prismenpaar (205, 206) zur Längung der Bahn eines Austrittsbündels des Separatorsystems, um die Bahnen der beiden austretenden Bündel des Separatorsystems zu egalisieren.

*Fig:1*

*Fig:2*

1

*Fig. 3*

*Fig. 4*

**Fig. 5**

**Fig. 6**

$$\tau_0 = \frac{L}{V}$$

**Fig. 7**

$m = 800$

$m = 1000$

3